# EUROPEAN PATENT APPLICATION

(11) **EP 4 506 874 A1**
(43) Date of publication of application: **12.02.2025**
(21) Application number: 24183429.0
(22) Date of filing: 20.06.2024
(51) Int. Cl.: G06Q 10/20, G06N 3/045, G06N 3/047, G06N 3/08, G06N 3/088, G06N 7/01

(54) **METHOD FOR GENERALIZED AND ALIGNMENT MODEL FOR REPAIR RECOMMENDATION**

(30) Priority: 09.08.2023 US 202318232063
(71) Applicant: Hitachi, Ltd., Tokyo 100-8280 (JP)
(72) Inventor: GHOSH, Dipanjan, Tokyo, 100-8280 (JP); FARAHAT, Ahmed, Tokyo, 100-8280 (JP); LEE, Xian Yeow, Tokyo, 100-8280 (JP); VIDYARATNE, Lasitha, Tokyo, 100-8280 (JP); GUPTA, Chetan, Tokyo, 100-8280 (JP)
(74) Representative: Mewburn Ellis LLP

(57) **Abstract**

Systems and methods described herein can involve training a first generative artificial intelligence (Al) model for a general domain, the first generative AI model trained using standard information components of the general domain; training a second AI model for a specific domain from the first generative AI model, the training of the second AI model being based on the use of the standard information components, non-standard information components of the specific domain and available label data of the specific domain; and fine-tuning the second AI model to align with preferences of the specific domain to maximize reward and minimize error.

## Description

### BACKGROUND

### Field

The present disclosure is generally directed to repair systems, and more specifically, to generalized and alignment models for repair recommendations.

Maintenance is a process in which the objective is to keep the equipment in a working, efficient and cost-effective condition. The maintenance process is conducted by performing the necessary actions on the equipment to achieve one or more of these objectives. These actions include, but are not limited to, the inspection, tuning, repair and overhaul of the equipment or its components.

When complex equipment experiences a failure, it is sometimes difficult and time-consuming to diagnose the equipment, identify the root cause of the problem, and decide what repair actions need to be conducted to fix the equipment. This problem is solved using a data-driven system for predictive maintenance that guides the maintenance staff on how to repair equipment when it is sent for repair, also called as repair-recommendation system.

Data-driven repair-recommendation using machine learning models traditionally depend on the availability of large amounts of data for every instance it is created and deployed. Such demands cause the system as well as the machine learning model trained using the data to be non-transferable. The related art implementations lack the ability to learn from different customers/instances in similar domains which makes such implementations unavailable for customers/instances with less data. Further, related art repair-recommendation models do not have the ability to adapt to the customer preferences, (i.e., lacks any scope of personalization or aligning to customer preference).

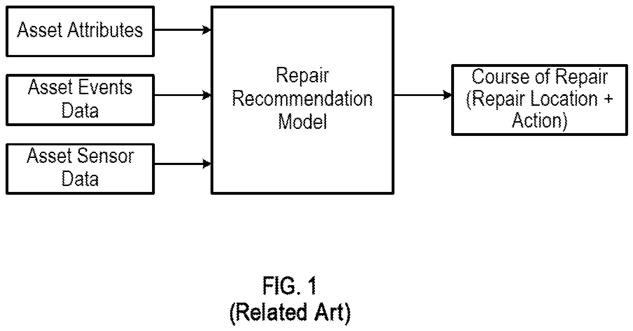

FIG. 1 illustrates an example related art data-driven repair recommendation system. Data-driven repair recommendation, (i.e., recommending a course of repair actions based on multimodal input) follows the flow as illustrated in FIG. 1 In this related art flow, a model is trained using historical repair data.

### SUMMARY

The example implementations solve the problems of the related art through developing a generative model on the standard information components that are transferable for different customers/instances of the system, and developing a data-driven model update mechanism based on technician feedback to personalize/align the model to customer preferences. The proposed system in algorithmic form addresses multi-modality wherein the data includes high dimensional sparse and dense data components. The algorithm includes a training mechanism for consistent structured output prediction. The algorithm leverages standardized information component for generative model training. The algorithm involves a mechanism to instantiate generative models and train fine-tuned models using data available for a customer/instance. The algorithm also involves a mechanism to personalize the model by updating the model parameters to align with customer preferences using customer feedback.

Data-driven repair recommendation systems have the following issues.

Lack of knowledge re-use: In repair recommendation systems, for asset classes, there are information components that are standardized and used in model training. For example, fault codes generated in automotive domain follow Society of Automotive Engineers (SAE) standards like J1939 protocol can be used. In related art repair recommendation systems, the models trained use such standard information as well as other information available for an instance/customer. The standard information has rich knowledge associated with it and is not restricted to a particular instance or customer. Such knowledge should be reused and transferred to different instances or customers. Currently, no special modelling technique is used to handle standard information and develop a generalized AI for the knowledge with the intention of reuse and transfer to different instances/customers.

Model in-applicability for less data: Existing repair recommendation systems have the assumption that for each instance or customer, there is large amount of data available for model training. However, this assumption is not correct in many cases, and many customers/use-cases are not able to utilize the power of the repair recommendation system. Current systems do not apply any unique technique to resolve this issue. Knowledge reuse, as stated above, and the method developed in the example implementations described herein, alleviates this situation.

Lack of personalization and alignment: A repair recommendation model trained using a lot of historical data is never perfect and can commit mistakes. Instances/use-cases/customers can have preferences about model behavior. These preferences are mapped to personalization. In current repair recommendation systems, there is no scope in the algorithm to tune the model parameter for instance/use-case/customer specific personalization. The personalization issue is heightened even further when there is less historical data available for model training.

Example implementations described herein resolve all the above-mentioned problems by developing a generalized model on standard information components in the form of a generative model, making it transferable from one instance/customer to another, thus enabling knowledge re-use. The proposed example implementations also alleviate the issue of less data by developing custom model instances for every instance/customer using the generalized model and other data available from the customer. Finally, the system allows model parameter updates leading to personalization and alignment to customer's/instance's/use-case's preferences.

Aspects of the present disclosure can include a method, which can involve training a first generative artificial intelligence (AI) model for a general domain, the first generative AI model trained using standard information components of the general domain; training a second AI model for a specific domain from the first generative AI model, the training of the second AI model being based on the use of the standard information components, non-standard information components of the specific domain and available label data of the specific domain; and fine-tuning the second AI model to align with preferences of the specific domain to maximize reward and minimize error.

Aspects of the present disclosure can include a computer program which can include instructions involving training a first generative artificial intelligence (AI) model for a general domain, the first generative AI model trained using standard information components of the general domain; training a second AI model for a specific domain from the first generative AI model, the training of the second AI model being based on the use of the standard information components, non-standard information components of the specific domain and available label data of the specific domain; and fine-tuning the second AI model to align with preferences of the specific domain to maximize reward and minimize error. The computer program and the instructions can be stored on a non-transitory computer readable medium and executed by one or more processors.

Aspects of the present disclosure can include a system, which can involve means for training a first generative artificial intelligence (AI) model for a general domain, the first generative AI model trained using standard information components of the general domain; means for training a second AI model for a specific domain from the first generative AI model, the training of the second AI model being based on the use of the standard information components, non-standard information components of the specific domain and available label data of the specific domain; and means for fine-tuning the second AI model to align with preferences of the specific domain to maximize reward and minimize error.

Aspects of the present disclosure can include an apparatus, which can involve a processor, configured to train a first generative artificial intelligence (AI) model for a general domain, the first generative AI model trained using standard information components of the general domain; train a second AI model for a specific domain from the first generative AI model, the training of the second AI model being based on the use of the standard information components, non-standard information components of the specific domain and available label data of the specific domain; and fine-tune the second AI model to align with preferences of the specific domain to maximize reward and minimize error.

### BRIEF DESCRIPTION OF DRAWINGS

FIG. 1 illustrates an example related art data-driven repair recommendation system.
FIG. 2 illustrates an example of the components and flow of the example implementations described herein.
FIG. 3 illustrates a system flow, in accordance with an example implementation.
FIG. 4 illustrates a plurality of physical systems that are networked to a management apparatus, in accordance with an example implementation.
FIG. 5 illustrates an example computing environment with an example computer device suitable for use in some example implementations.

### DETAILED DESCRIPTION

The following detailed description provides details of the figures and example implementations of the present application. Reference numerals and descriptions of redundant elements between figures are omitted for clarity. Terms used throughout the description are provided as examples and are not intended to be limiting. For example, the use of the term "automatic" may involve fully automatic or semi-automatic implementations involving user or administrator control over certain aspects of the implementation, depending on the desired implementation of one of ordinary skill in the art practicing implementations of the present application. Selection can be conducted by a user through a user interface or other input means or can be implemented through a desired algorithm. Example implementations as described herein can be utilized either singularly or in combination and the functionality of the example implementations can be implemented through any means according to the desired implementations.

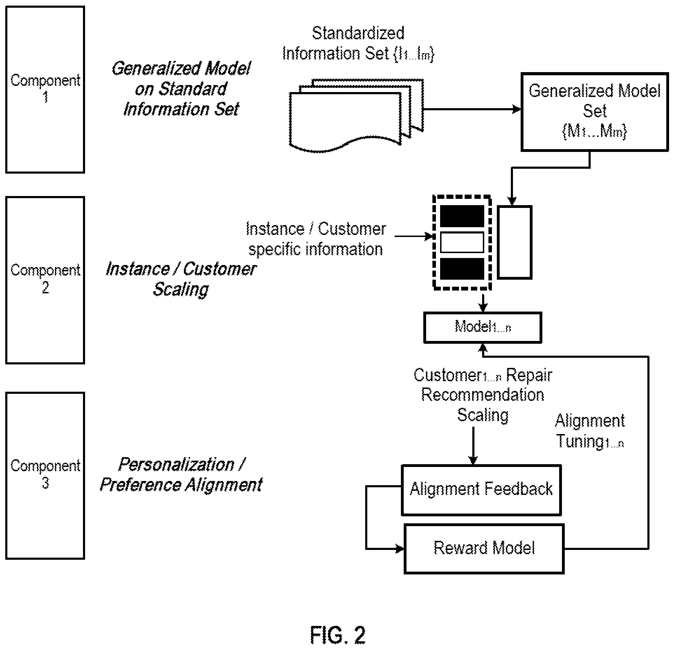

FIG. 2 illustrates an example of the components and flow of the example implementations described herein.

Generalized Model on Standard Information Set: The first component (Component 1) is developing a generalized model for the standardized information set. An example of standardized information set is fault codes in the automotive domain following SAE standards (J1939 protocol, etc.). Each fault code is a standard; however, a sequence of fault codes can lead to a different failure as well as an associated repair. All customers can have same set of fault codes, but have different sequences of fault codes and thus different failures along with associated repairs. A generative model is trained on such a standard information set leads to transferring the model to different customers/instances, knowledge re-use across instances/customers, and combining with custom information available for fine-tuning and instantiation.

Instance/Customer Scaling: For the second component (Component 2), to instantiate a repair recommendation model, the generalized model is combined with information available for a use-case/customer/instance to form a fine-tuned, custom repair-recommendation model. This achieves knowledge re-use of the standardized information, less reliance on the availability of large amount of historical data for each instance/customer and scaling repair-recommendation model instance scaling.

Personalization/Preference Alignment: The third component (Component 3) involves personalizing each instance of the repair-recommendation model by aligning it will the preferences of the customer. An example of a preference is a penalty of $100 for an incorrect repair recommended by a model for customer 1, while a penalty of $10 is incurred for customer 2. A preference can have different attributes, such as cost of incorrect repair, safety aspect of incorrect repair, and so on, in accordance with the desired implementation.

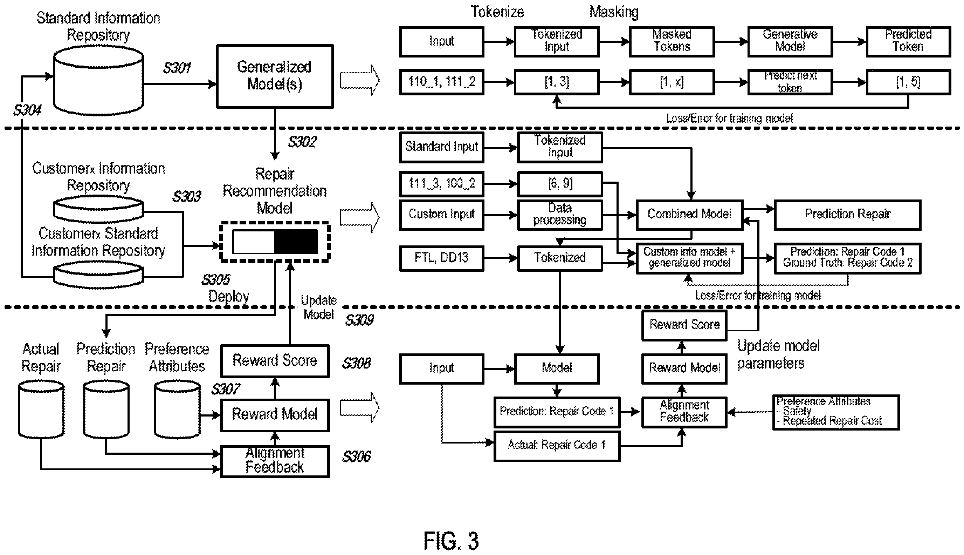

FIG. 3 illustrates a system flow, in accordance with an example implementation. Following are the detailed steps and as shown in FIG. 3. Steps S301 and S304 are related to Component 1, Steps S302 and S303 are related to Component 2, Steps S305 to S309 are related to Component 3.

Step S301: In Step S301, the example implementations train a first generative artificial intelligence (AI) model for a general domain, the first generative AI model trained using standard information components of the general domain. Using the standard information repository, this step trains generalized model(s) for each information in the set. A generalized model is a generative model, that is trained in an unsupervised/self-supervised manner.

In an example implementation, the training can be conducted by inputting partial information (e.g., partial sequences) from known information of the standard information components of the general domain; outputting a prediction of remaining information of the known information from the partial information with the first generative AI model; and utilizing unsupervised learning to reduce error between the predicted remaining information and the known information. Specifically, a method to train a generative model can be where part of the sequence is masked to be the partial information, and the un-masked sequence is used to predict the masked parts of the sequences. The error is used to train the generalized model. There can be other methods to train such generalized model and considering their generative ability, their learned feature space is rich. The standardized information set is a continuously evolving and information is added to the set from different customers/instances. Considering this is industry standard information associated with an asset class (e.g., automotive), the data does not breach any privacy or ethical and financial guidelines. The generalized model being trained in an unsupervised/self-supervised manner, is transferable to different instances thus enabling knowledge re-use and transfer. This first generative AI model is configured to output a first repair recommendation for the general domain. Such a repair recommendation can involve a sequence of repair activities, with each repair activity of the sequence of repair activities involving a location for a repair and a repair action.

The generalized model is trained continuously based on a schedule and availability of new information from new instances/customers.

Step S302 and Step S303: In steps S302 and S303, the example implementations train a second AI model for a specific domain from the first generative AI model, the training of the second AI model being based on the use of the standard information components, non-standard information components of the specific domain and available label data of the specific domain. Such available label data can involve repair codes indicative of a system to be repaired and a repair action associated with the system to be repaired.

These steps together involve creating a repair recommendation model instance. Repair recommendation model instance is dependent on the availability of the data for the use-case/customer. The data available can be of different modalities in addition to the standard information. Further, the available data does not need to be large; even small quantities of data is applicable for the repair recommendation model creation. The standard information available goes through the same data processing steps as the generalized model creation, while the other data can have its own data processing steps. Accordingly, to train the second AI model for the specific domain from the first generative AI model, there can be an execution of feature engineering on the non-standard information components of the specific domain, encoding features of the non-standard information components, and then combining the first generative AI model and the encoded non-standard information components using the available label data to generate the second AI model.

Through combining the first generative AI model and the encoded non-standard information components using the available label data, the repair recommendation model is thereby composed of an instance of the generalized model and another model to handle the other additional data modalities. The output of this model is the course of repair actions. During training, this composite model (i.e., repair recommendation model), uses learning such as supervised learning to reduced error of the second AI model from the available label information. Such an implementation allows for the use of the error between prediction and ground truth to optimize the model parameters. This second AI model can be configured to output a second repair recommendation for the specific domain. Such a repair recommendation can involve a sequence of repair activities, with each repair activity of the sequence of repair activities involving a location for a repair and a repair action.

Using the composite model enables knowledge re-use of the standardized information. It should be noted that the standard information is collected and keeps growing from all customers/use-cases/instances (S304), thus, collective knowledge is being used for the generalized model and for a specific repair recommendation model instance.

Step S304: This step involves archiving and adding the new standard information to the existing standard information repository set. This new data will then be used to re-train the generalized model(s) (S301).

Step S305: Deploy the repair recommendation model instance in the field. By doing this the model is used to produce repair recommendation that the technicians can use. Further, the actual repairs being conducted by technicians is also recorded in case the recommendations are incorrect. To fine-tune the second AI model, step S305 deploys the second AI model for a period of time to collect model predictions of the second AI model and actual repairs conducted during the period of time.

Step S306: This step involves collecting the alignment feedback between the predictions and the actual repairs conducted on field. This step involves collecting the model predictions of the second AI model and the actual repairs conducted during the period of deployment. Alignment feedback can simply be true or false, or complex, such as the distance between them in their encoding spaces.

Step S307: This step determines preference attributes of the specific domain from the actual repairs. Customers have preferences about repair recommendations. For example, for customer 1, the cost of repeated repair in case of inaccurate predictions can be big, hence they are sensitive about it. For customer 2, it can be safety issues. Preferences can have multiple attributes, that when combined can lead an understanding whether a particular prediction will generate good or bad value for them. Step S307 also involves training a reward model using the model predictions, the actual repairs conducted, and the preference attributes. The value is encoded in form of a reward score by a reward model. A reward model can be deterministic or a machine learning model. The reward model takes into consideration the recommendations, actual repairs, attributes and produces a scaler score.

Step S308: This step involves producing the reward score using the reward model. Depending on the desired implementation, the error for the reward model can be determined from a difference between the model predictions and the actual repairs selected. In such a case, the reward model can be configured to generate a reward for when the model prediction is the same as the actual repair selected.

Step S309: The reward score is used to update the repair recommendation model parameters. The second AI model is then fine-tuned from the reward generated from the reward model. Iteratively performing steps S305 to S309 will lead to a personalized and aligned model to customer's/instance's/use-case's preferences. Accordingly, the example implementations can thereby fine-tune the second AI model to align with preferences of the specific domain to maximize reward and minimize error. Through the steps described in S301 to S309, the example implementations thereby allow for the transfer of knowledge of a general domain to a specific domain, allow for the training of models even if limited data is available from the specific domain, and allow for personalization of a model to a specific domain with reduced errors compared to training from scratch, thereby resulting in a technological improvement over the related art implementations.

The current state of the art for data-driven repair recommendation methods is dependent on the availability of large amount data for each instantiation, no scope of knowledge re-use and no scope of personalization. The example implementations described herein reduce the reliance on the availability of large amount data, thus, opening opportunity of deployment for those customers which do not have large data.

Further, considering the modular nature of modeling, the example implementations emphasizes knowledge re-use of standard information across various instantiations/customers. This can benefit small scale customers by using knowledge and experience gained by established customers without breaching any contractual obligations. On the other hand, this also assists model service providers by scaling deployments across many customers seamlessly.

Data-driven repair recommendation models can make mistakes. The existing related art repair recommendation model algorithms have no scope of personalization tuning. The example implementations described herein introduces a personalization component and that is customizable and making the model adaptive to customer's needs and preferences and creating operational value.

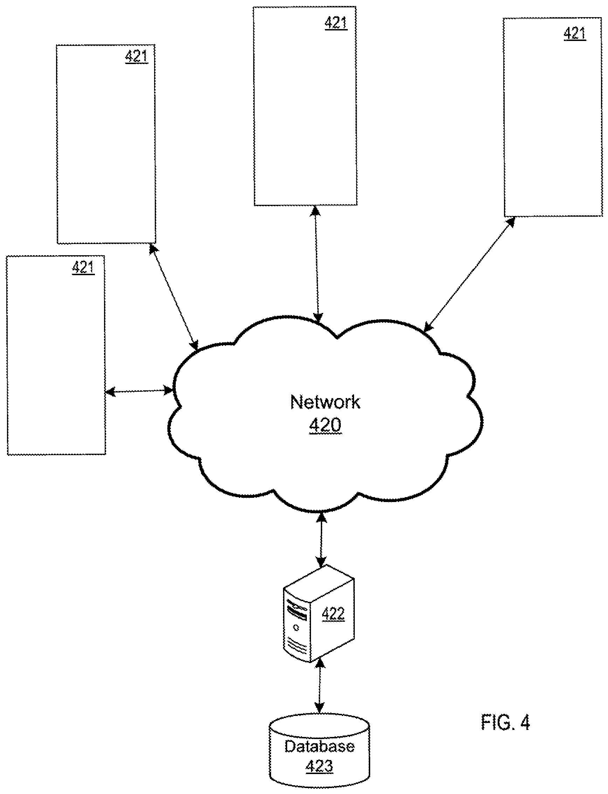

FIG. 4 illustrates a plurality of physical systems that are networked to a management apparatus, in accordance with an example implementation. One or more physical systems 421 managing customer databases with repair code information with their specific domain are communicatively coupled to a network 420 (e.g., local area network (LAN), wide area network (WAN)) through the corresponding network interface of the physical systems 421, which is connected to a management apparatus 422. The one or more systems 421 may or may not be associated with sensors to identify the repair code for a given task, depending on the desired implementation. The management apparatus 422 manages a database 423, which contains repair codes for a general domain. Models can be trained or deployed on the management apparatus 422 on behalf of a physical system 421, or can be provided to the physical system 421 for execution depending on the desired implementation

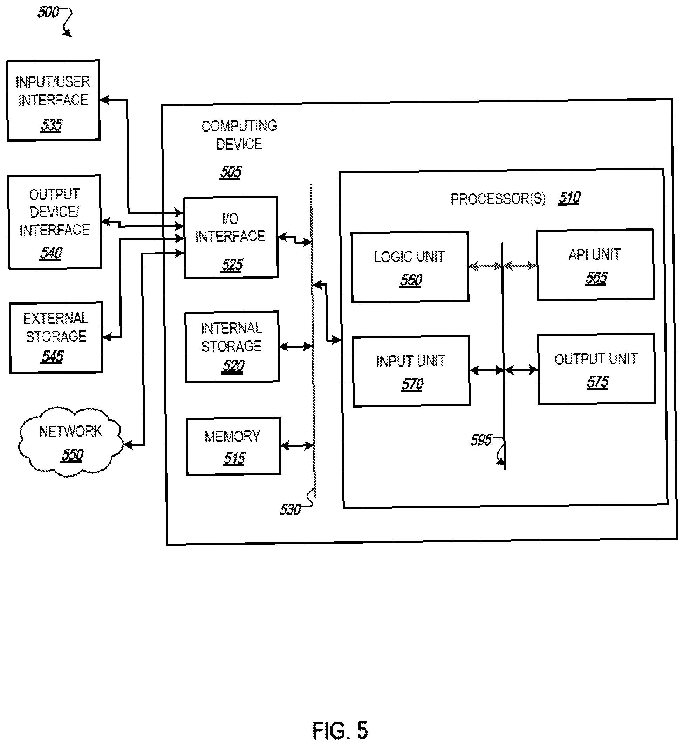

FIG. 5 illustrates an example computing environment with an example computer device suitable for use in some example implementations, such as a management apparatus 422 as illustrated in FIG. 4. Computer device 505 in computing environment 500 can include one or more processing units, cores, or processors 510, memory 515 (e.g., RAM, ROM, and/or the like), internal storage 520 (e.g., magnetic, optical, solid state storage, and/or organic), and/or I/O interface 525, any of which can be coupled on a communication mechanism or bus 530 for communicating information or embedded in the computer device 505. I/O interface 525 is also configured to receive images from cameras or provide images to projectors or displays, depending on the desired implementation.

Computer device 505 can be communicatively coupled to input/user interface 535 and output device/interface 540. Either one or both input/user interface 535 and output device/interface 540 can be a wired or wireless interface and can be detachable. Input/user interface 535 may include any device, component, sensor, or interface, physical or virtual, that can be used to provide input (e.g., buttons, touch-screen interface, keyboard, a pointing/cursor control, microphone, camera, braille, motion sensor, optical reader, and/or the like). Output device/interface 540 may include a display, television, monitor, printer, speaker, braille, or the like. In some example implementations, input/user interface 535 and output device/interface 540 can be embedded with or physically coupled to the computer device 505. In other example implementations, other computer devices may function as or provide the functions of input/user interface 535 and output device/interface 540 for a computer device 505.

Examples of computer device 505 may include, but are not limited to, highly mobile devices (e.g., smartphones, devices in vehicles and other machines, devices carried by humans and animals, and the like), mobile devices (e.g., tablets, notebooks, laptops, personal computers, portable televisions, radios, and the like), and devices not designed for mobility (e.g., desktop computers, other computers, information kiosks, televisions with one or more processors embedded therein and/or coupled thereto, radios, and the like).

Computer device 505 can be communicatively coupled (e.g., via I/O interface 525) to external storage 545 and network 550 for communicating with any number of networked components, devices, and systems, including one or more computer devices of the same or different configurations. Computer device 505 or any connected computer device can be functioning as, providing services of, or referred to as a server, client, thin server, general machine, special-purpose machine, or another label.

I/O interface 525 can include, but is not limited to, wired and/or wireless interfaces using any communication or I/O protocols or standards (e.g., Ethernet, 802.11x, Universal System Bus, WiMAX, modem, a cellular network protocol, and the like) for communicating information to and/or from at least all the connected components, devices, and network in computing environment 500. Network 550 can be any network or combination of networks (e.g., the Internet, local area network, wide area network, a telephonic network, a cellular network, satellite network, and the like).

Computer device 505 can use and/or communicate using computer-usable or computer-readable media, including transitory media and non-transitory media. Transitory media include transmission media (e.g., metal cables, fiber optics), signals, carrier waves, and the like. Non-transitory media include magnetic media (e.g., disks and tapes), optical media (e.g., CD ROM, digital video disks, Blu-ray disks), solid state media (e.g., RAM, ROM, flash memory, solid-state storage), and other non-volatile storage or memory.

Computer device 505 can be used to implement techniques, methods, applications, processes, or computer-executable instructions in some example computing environments. Computer-executable instructions can be retrieved from transitory media, and stored on and retrieved from non-transitory media. The executable instructions can originate from one or more of any programming, scripting, and machine languages (e.g., C, C++, C#, Java, Visual Basic, Python, Perl, JavaScript, and others).

Processor(s) 510 can execute under any operating system (OS) (not shown), in a native or virtual environment. One or more applications can be deployed that include logic unit 560, application programming interface (API) unit 565, input unit 570, output unit 575, and inter-unit communication mechanism 595 for the different units to communicate with each other, with the OS, and with other applications (not shown). The described units and elements can be varied in design, function, configuration, or implementation and are not limited to the descriptions provided. Processor(s) 510 can be in the form of hardware processors such as central processing units (CPUs) or in a combination of hardware and software units.

In some example implementations, when information or an execution instruction is received by API unit 565, it may be communicated to one or more other units (e.g., logic unit 560, input unit 570, output unit 575). In some instances, logic unit 560 may be configured to control the information flow among the units and direct the services provided by API unit 565, input unit 570, output unit 575, in some example implementations described above. For example, the flow of one or more processes or implementations may be controlled by logic unit 560 alone or in conjunction with API unit 565. The input unit 570 may be configured to obtain input for the calculations described in the example implementations, and the output unit 575 may be configured to provide output based on the calculations described in the example implementations.

Processor(s) 510 can be configured to execute a method or instructions which can involve training a first generative artificial intelligence (AI) model for a general domain, the first generative AI model trained using standard information components of the general domain; training a second AI model for a specific domain from the first generative AI model, the training of the second AI model being based on the use of the standard information components, non-standard information components of the specific domain and available label data of the specific domain; and fine-tuning the second AI model to align with preferences of the specific domain to maximize reward and minimize error as described with respect to S301 to S305 of FIG. 3.

Depending on the desired implementation, the first generative AI model is configured to output a first repair recommendation for the general domain, wherein the second AI model is configured to output a second repair recommendation for the specific domain. Such a first repair recommendation and the second repair recommendation can involve a sequence of repair activities, each repair activity of the sequence of repair activities involving a location for a repair (e.g., on an object subject to repair) and a repair action.

As described with respect to S301 to S303 of FIG. 3, the processor(s) 510 can be configured to execute the method or instructions as described above, wherein the training the first generative AI model for the general domain involves inputting partial information (e.g., a sequence) from known information of the standard information components of the general domain; outputting a prediction of remaining information of the known information from the partial information with the first generative AI model; and utilizing unsupervised learning to reduce error between the predicted remaining information and the known information.

Processor(s) 510 can be configured to execute the method or instructions as described above, wherein the training the second AI model for the specific domain from the first generative AI model can involve executing feature engineering on the non-standard information components of the specific domain (e.g., via any feature extraction process); encoding features of the non-standard information components (e.g., from the features generated from the feature engineering); combining the first generative AI model and the encoded non-standard information components using the available label data to generate the second AI model; and using supervised learning to reduced error of the second AI model from the available label information as described with respect to S301 to S304 of FIG. 3.

Processor(s) 510 can be configured to execute the method or instructions as described above, wherein the fine-tuning the second AI model can involve deploying the second AI model for a period of time; collecting model predictions of the second AI model and actual repairs conducted during the period of time; determining preference attributes of the specific domain from the actual repairs; training a reward model using the model predictions, the actual repairs conducted, and the preference attributes; and fine-tuning the second AI model from the reward generated from the reward model as described with respect to S305 to S309 of FIG. 3. Depending on the desired implementation, the error for the reward model is determined from a difference between the model predictions and the actual repairs, and wherein the reward model is configured to generate a reward for when a model prediction is same as an actual repair to ensure that the reward model provides rewards in response to "correct" predictions.

As described herein, the available label data can include repair codes indicative of a system to be repaired and a repair action associated with the system to be repaired.

Some portions of the detailed description are presented in terms of algorithms and symbolic representations of operations within a computer. These algorithmic descriptions and symbolic representations are the means used by those skilled in the data processing arts to convey the essence of their innovations to others skilled in the art. An algorithm is a series of defined steps leading to a desired end state or result. In example implementations, the steps carried out require physical manipulations of tangible quantities for achieving a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer readable medium, such as a computer-readable storage medium or a computer-readable signal medium. A computer-readable storage medium may involve tangible mediums such as, but not limited to optical disks, magnetic disks, read-only memories, random access memories, solid state devices and drives, or any other types of tangible or non-transitory media suitable for storing electronic information. A computer readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the techniques of the example implementations as described herein. The instructions of the programming language(s) may be executed by one or more processing devices, e.g., central processing units (CPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (software), which if executed by a processor, would cause the processor to perform a method to carry out implementations of the present application. Further, some example implementations of the present application may be performed solely in hardware, whereas other example implementations may be performed solely in software. Moreover, the various functions described can be performed in a single unit or can be spread across a number of components in any number of ways. When performed by software, the methods may be executed by a processor, such as a general-purpose computer, based on instructions stored on a computer-readable medium. If desired, the instructions can be stored on the medium in a compressed and/or encrypted format.

Moreover, other implementations of the present application will be apparent to those skilled in the art from consideration of the specification and practice of the techniques of the present application. Various aspects and/or components of the described example implementations may be used singly or in any combination. It is intended that the specification and example implementations be considered as examples only, with the true scope and spirit of the present application being indicated by the following claims.

## Claims

1. A method, comprising:
training a first generative artificial intelligence (AI) model for a general domain, the first generative AI model trained using standard information components of the general domain;
training a second AI model for a specific domain from the first generative AI model, the training of the second AI model being based on the use of the standard information components, non-standard information components of the specific domain and available label data of the specific domain; and
fine-tuning the second AI model to align with preferences of the specific domain to maximize reward and minimize error.

2. The method of claim 1, wherein the first generative AI model is configured to output a first repair recommendation for the general domain, wherein the second AI model is configured to output a second repair recommendation for the specific domain.

3. The method of claim 2, wherein the first repair recommendation and the second repair recommendation comprise a sequence of repair activities, each repair activity of the sequence of repair activities comprising a location for a repair and a repair action.

4. The method of claim 1, wherein the training the first generative AI model for the general domain comprises:
inputting partial information from known information of the standard information components of the general domain;
outputting a prediction of remaining information of the known information from the partial information with the first generative AI model; and
utilizing unsupervised learning to reduce error between the predicted remaining information and the known information.

5. The method of claim 1, wherein the training the second AI model for the specific domain from the first generative AI model comprises:
executing feature engineering on the non-standard information components of the specific domain;
encoding features of the non-standard information components;
combining the first generative AI model and the encoded non-standard information components using the available label data to generate the second AI model; and
using supervised learning to reduced error of the second AI model from the available label information.

6. The method of claim 1, wherein the fine-tuning the second AI model comprises:
deploying the second AI model for a period of time;
collecting model predictions of the second AI model and actual repairs conducted during the period of time;
determining preference attributes of the specific domain from the actual repairs;
training a reward model using the model predictions, the actual repairs conducted, and the preference attributes; and
fine-tuning the second AI model from the reward generated from the reward model.

7. The method of claim 6, wherein error for the reward model is determined from a difference between the model predictions and the actual repairs, and wherein the reward model is configured to generate a reward for when a model prediction is same as an actual repair.

8. The method of claim 1, wherein the available label data comprises repair codes indicative of a system to be repaired and a repair action associated with the system to be repaired.

9. A non-transitory computer readable medium, storing instructions for executing a process, the instructions comprising:
training a first generative artificial intelligence (AI) model for a general domain, the first generative AI model trained using standard information components of the general domain;
training a second AI model for a specific domain from the first generative AI model, the training of the second AI model being based on the use of the standard information components, non-standard information components of the specific domain and available label data of the specific domain; and
fine-tuning the second AI model to align with preferences of the specific domain to maximize reward and minimize error.

10. The non-transitory computer readable medium of claim 9, wherein the first generative AI model is configured to output a first repair recommendation for the general domain, wherein the second AI model is configured to output a second repair recommendation for the specific domain.

11. The non-transitory computer readable medium of claim 10, wherein the first repair recommendation and the second repair recommendation comprise a sequence of repair activities, each repair activity of the sequence of repair activities comprising a location for a repair and a repair action.

12. The non-transitory computer readable medium of claim 9, wherein the training the first generative AI model for the general domain comprises:
inputting partial information from known information of the standard information components of the general domain;
outputting a prediction of remaining information of the known information from the partial information with the first generative AI model; and
utilizing unsupervised learning to reduce error between the predicted remaining information and the known information.

13. The non-transitory computer readable medium of claim 9, wherein the training the second AI model for the specific domain from the first generative AI model comprises:
executing feature engineering on the non-standard information components of the specific domain;
encoding features of the non-standard information components;
combining the first generative AI model and the encoded non-standard information components using the available label data to generate the second AI model; and
using supervised learning to reduced error of the second AI model from the available label information.

14. The non-transitory computer readable medium of claim 9, wherein the fine-tuning the second AI model comprises:
deploying the second AI model for a period of time;
collecting model predictions of the second AI model and actual repairs conducted during the period of time;
determining preference attributes of the specific domain from the actual repairs;
training a reward model using the model predictions, the actual repairs conducted, and the preference attributes; and
fine-tuning the second AI model from the reward generated from the reward model.

15. The non-transitory computer readable medium of claim 14, wherein error for the reward model is determined from a difference between the model predictions and the actual repairs, and wherein the reward model is configured to generate a reward for when a model prediction is same as an actual repair.

16. The non-transitory computer readable medium of claim 9, wherein the available label data comprises repair codes indicative of a system to be repaired and a repair action associated with the system to be repaired.

17. An apparatus, comprising:
a processor, configured to:
train a first generative artificial intelligence (AI) model for a general domain, the first generative AI model trained using standard information components of the general domain;
train a second AI model for a specific domain from the first generative AI model, the training of the second AI model being based on the use of the standard information components, non-standard information components of the specific domain and available label data of the specific domain; and
fine-tune the second AI model to align with preferences of the specific domain to maximize reward and minimize error.
